# EUROPÄISCHE PATENTSCHRIFT

(11) **EP 2 103 482 B1**
(45) Veröffentlichungstag und Bekanntmachung des Hinweises auf die Patenterteilung: **02.03.2011**
(21) Anmeldenummer: 09003848.0
(22) Anmeldetag: 17.03.2009
(51) Int. Cl.: B60P 1/26, E05D 7/10

(54) **Scharnierbolzen für einen Nutzfahrzeugaufbau, Scharnier und Nutzfahrzeug mit einem derartigen Scharnierbolzen**
Hinge pin for a commercial vehicle structure, hinge and commercial vehicle with such a hinge pin
Boulon de charnière pour un montage de véhicule utilitaire, charnière et véhicule utilitaire doté d'un tel boulon de charnière

(30) Priorität: 17.03.2008 DE 202008003839 U
(43) Veröffentlichungstag der Anmeldung: 23.09.2009
(73) Patentinhaber: Kögel Trailer GmbH & Co. KG, 86368 Gersthofen (DE)
(72) Erfinder: Lima, Joachim, 89601 Schelklingen (DE)
(74) Vertreter: Meissner, Bolte & Partner

(56) Entgegenhaltungen:
- EP-A- 0 127 011
- DE-A1- 3 414 401
- DE-A1- 19 620 918
- DE-U1- 8 912 213
- DE-U1- 9 205 194
- DE-U1- 29 918 359

## Beschreibung

Die Erfindung betrifft einen Scharnierbolzen für einen Nutzfahrzeugaufbau gemäß dem Oberbegriff des Anspruchs 1. Ferner betrifft die Erfindung ein Scharnier und ein Nutzfahrzeug mit einem derartigen Scharnierbolzen. Ein Scharnierbolzen der eingangs genannten Art ist aus der EP 0 146 651 und DE 8912213U bekannt.

Der bekannte Scharnierbolzen weist ein Achsenteil zur drehbaren Lagerung eines Lagerteils sowie einen Achsenhalter zur Befestigung des Scharnierbolzens an einem Außenrahmen eines Nutzfahrzeugs auf. Der Achsenhalter liegt im eingebauten Zustand an einer senkrechten Außenfläche des Außenrahmens an. Das Achsenteil umfasst eine Achse, die im Wesentlichen zylinderförmig ausgebildet ist. An einem freien Ende des Achsenteils ist ein Ansatz angeordnet, dessen Breite dem Durchmesser der Achse entspricht. Die Längsenden des Ansatzes sind jeweils mit dem Radius der Achse abgerundet, so dass der Ansatz im Wesentlichen einen ovalen Querschnitt aufweist.

Der Scharnierbolzen ist Teil eines Scharniers zur gelenkigen Verbindung einer Bordwand mit einem Nutzfahrzeugaußenrahmen. Dazu ist an einer unteren Längsfläche der Bordwand ein Lagerteil angeordnet, das eine Langlochbohrung aufweist, deren Querschnitt dem Querschnitt des Ansatzes des Achsenteils entspricht. Um das Lagerteil mit dem Achsenteil zu verbinden, wird die Bordwand in einer abgeklappten Stellung so ausgerichtet, dass die Langlochbohrung über den Ansatz geschoben werden kann. Bei dem Scharnier gemäß der EP 0 146 651 ist der Ansatz des Achsenteils senkrecht nach oben und die längere Querschnittsachse der Langlochbohrung in geschlossener Bordwandstellung waagrecht ausgerichtet. Zur Verbindung der beiden Scharnierteile wird daher die Bordwand in die Waagrechte gekippt, so dass die Langlochbohrung und der Ansatz gleich ausgerichtet sind. In hochgeklappter Stellung der Bordwand verhindert der Ansatz, dass die Bordwand von dem Scharnierbolzen abrutscht.

Die Befestigung des in der EP 0 146 651 offenbarten Scharnierbolzens am Außenrahmen des Nutzfahrzeugs erfolgt durch Verschweißen des Achsenhalters mit dem Außenrahmen. Auf diese Weise wird sichergestellt, dass der Scharnierbolzen und somit die Bordwand nicht einfach entfernt werden können. Dadurch, dass der Zugang zur Ladung des Nutzfahrzeugs nunmehr nur durch das Abklappen der Bordwand möglich ist, wird Zollsicherheit gewährleistet.

Der bekannte Scharnierbolzen hat den Nachteil, dass der Achsenhalter unlösbar mit dem Außenrahmen verbunden ist, wodurch ein späterer oder nachträglicher Einbau des Scharnierbolzens, beispielsweise nach Lackieren des Außenrahmens, verhindert ist.

Bei einer weiteren Ausführungsform der EP 0 146 651 ist der Scharnierbolzen mit der Bordwand verbunden und das Lagerteil mit dem Außenrahmen verschweißt. Der Achsenhalter des Scharnierbolzens wird bei dieser Ausführungsform durch eine Schraubverbindung an der Bordwand fixiert. Um auch hier ein unberechtigtes Lösen des Scharnierbolzens zu verhindern, weist das Lagerteil Nasen auf, die im geschlossenen Zustand der Bordwand die Schrauben im Achsenteil verdecken.

Die Zollsicherheit dieser Ausführungsform des Scharnierbolzens wird nur durch eine aufwändige Konstruktion des Lagerteils erreicht. Ferner ist die Zollsicherheit nur bei Verwendung des mit dem Außenrahmen verschweißten Lagerteils möglich, wodurch ein nachträglicher Einbau des zollsicheren Scharniers verhindert ist.

Der Erfindung liegt daher die Aufgabe zu Grunde, einen Scharnierbolzen für einen Nutzfahrzeugaufbau anzugeben, der einfach und schnell montier- und demontierbar ist, wobei die Montage auch nachträglich, beispielsweise nach Lackieren des Außenrahmens, erfolgen kann und der gleichzeitig zur Wahrnehmung einer Zollsicherungsfunktion geeignet ist. Ferner liegt der Erfindung die Aufgabe zu Grunde, ein Scharnier und ein Nutzfahrzeug mit einem derartigen Scharnierbolzen anzugeben.

Erfindungsgemäß wird diese Aufgabe im Hinblick auf den Scharnierbolzen durch den Gegenstand des Anspruchs 1, im Hinblick auf das Scharnier durch den Gegenstand des Anspruchs 12 und im Hinblick auf das Nutzfahrzeug durch den Gegenstand des Anspruchs 13 gelöst.

Der Erfindung liegt der Gedanke zu Grunde, einen Scharnierbolzen für einen Nutzfahrzeugaufbau mit einem Bolzenteil, das mit einem Rahmenflansch verbunden ist, anzugeben, wobei der Rahmenflansch eine Außenfläche und eine der Außenfläche gegenüber angeordnete Innenfläche aufweist, die im eingebauten Zustand des Scharnierbolzens zur Anlage an einem Außenrahmen vorgesehen ist. Der Scharnierbolzen weist wenigstens einen an der Innenfläche des Rahmenflanschs angeordneten Fortsatz auf, der ein freies Ende umfasst, wobei zwischen dem freien Ende und der Innenfläche eine Ausnehmung gebildet ist, die angepasst ist derart, dass der Außenrahmen im eingebauten Zustand in die Ausnehmung eingreifen kann, sowie wenigstens ein dem Fortsatz zugeordnetes Mittel, insbesondere wenigstens eine Öffnung, für ein Verbindungselement zur Verbindung des Rahmenflanschs mit dem Außenrahmen.

Der erfindungsgemäße Scharnierbolzen kann im Unterschied zu den bekannten Scharnierbolzen nachträglich, insbesondere nach vollständiger Fertigstellung (einschließlich Lackierung) des Nutzfahrzeugaußenrahmens montiert werden. Auf diese Weise ist es möglich, ein Nutzfahrzeug mit einem erfindungsgemäßen Scharnierbolzen nachzurüsten. Zur Verbindung des Scharnierbolzens mit dem Außenrahmen dient der an der Innenfläche des Rahmenflanschs angeordnete Fortsatz, dessen Ausnehmung derart angepasst ist, dass der Außenrahmen im eingebauten Zustand in die Ausnehmung eingreift. Zusätzlich wird der erfindungsgemäße Scharnierbolzen mit Hilfe eines Verbindungselements, beispielsweise einer Schraube oder einem Niet, mit dem Außenrahmen verbunden. Durch die zwischen dem freien Ende des Fortsatzes und der Innenfläche des Rahmenflanschs gebildete Ausnehmung wird dabei nicht nur eine Verdrehsicherung bereitgestellt, so dass der erfindungsgemäße Scharnierbolzen sicher am Außenrahmen angebracht ist, sondern auch gewährleistet, dass im eingebauten Zustand, d.h. bei eingebauter, insbesondere geschlossener, Bordwand, der Scharnierbolzen nicht vom Außenrahmen gelöst werden kann, auch wenn das Verbindungselement entfernt wird.

Zur Montage des erfindungsgemäßen Scharnierbolzens wird der Fortsatz mit Hilfe der Ausnehmung in einen Außenrahmen eingehakt, wobei dazu die Spitze des Bolzenteils in Richtung des Außenrahmens gekippt wird. Sobald der Außenrahmen in die Ausnehmung eingreift, wird der Scharnierbolzen in Längsrichtung des Außenrahmens verschoben, bis der Fortsatz vollständig in die Öffnung des Außenrahmens hineingleitet und die Innenfläche des Rahmenflanschs bündig am Außenrahmen anliegt. Somit ist der Scharnierbolzen parallel zum Außenrahmen ausgerichtet. In dieser Stellung wird der Scharnierbolzen mit Hilfe des Verbindungselements am Außenrahmen fixiert.

Wenn die Bordwand bzw. das Scharniergegenstück auf dem Scharnierbolzen angebracht ist, ist es aufgrund der formschlüssigen Verbindung zwischen der Ausnehmung des Fortsatzes und dem Außenrahmen auch nach Entfernen des Verbindungselements nicht mehr möglich, eine Kippbewegung der Bolzenteilspitze in Richtung des Außenrahmens auszuführen. Im eingebauten Zustand des Scharnierbolzens umgreift der Fortsatz des Rahmenflanschs eine Außenwandung des Außenrahmens, d.h. die Ausnehmung ist in die Wandung des Außenrahmens eingehakt. Dabei ist der Fortsatz derart an die Öffnung des Außenrahmens angepasst, dass ein Lösen der formschlüssigen Verbindung durch eine Verschiebung des Scharnierbolzens in Längsrichtung blockiert ist. Das Entfernen des Scharnierbolzens ist nur durch eine Hebelbewegung bzw. ein Kippen der Bolzenteilspitze zum Außenrahmen hin möglich. Diese Bewegung ist durch das auf dem Bolzenteil angebrachte Scharniergegenstück gesperrt, so dass der Scharnierbolzen nur nach Entfernen des Scharniergegenstücks bzw. der Bordwand gelöst werden kann, selbst wenn der Scharnierbolzen nicht mehr mit einem Verbindungselement am Außenrahmen befestigt ist. Die Zollsicherheit des erfindungsgemäßen Scharnierbolzens bzw. dessen diesbezügliche Eignung als zollsicherer Verschluss wird also dadurch erreicht, dass die zum Entfernen des Scharnierbolzens notwendige Kippbewegung durch das Scharniergegenstück bzw. das Aufnahmeteil mechanisch gesperrt ist.

Vorzugsweise erstrecken sich die Ausnehmung und/oder das freie Ende des Fortsatzes im Wesentlichen in Richtung des Bolzenteils. Bevorzugt weist das freie Ende des Fortsatzes eine Stirnfläche auf, die im Wesentlichen senkrecht zur Innenfläche des Rahmenflanschs angeordnet ist und zusammen mit der Innenfläche eine Öffnung der Ausnehmung bildet. Der erfindungsgemäße Scharnierbolzen ist in dieser Ausführungsform besonders dazu geeignet, eine Zollsicherungsfunktion zu übernehmen bzw. Zollsicherheit zu gewährleisten. Ein Zugang zur Ladung ist auf diese Weise nur durch das Entfernen eines Scharniergegenstücks bzw. ein Abklappen der Bordwand möglich.

Ferner kann die Stirnfläche mit einer vorderen Fläche des Rahmenflanschs fluchten. Die vordere Fläche begrenzt den Rahmenflansch auf einer dem Bolzenteil zugewandten Seite und verbindet die Innenfläche mit der Außenfläche. Dabei ist die Außenfläche vorteilhafterweise jeweils rechtwinklig zur Innen- und Außenfläche angeordnet. Auf diese Weise wird der Einbau bzw. das Einsetzen des erfindungsgemäßen Scharnierbolzens in einen Nutzfahrzeugaußenrahmen erleichtert.

Des Weiteren kann der Fortsatz einen Sockel aufweisen, der mit dem Rahmenflansch verbunden und breiter als das freie Ende ist. Auf diese Weise wird eine besonders stabile Verbindung zwischen dem Fortsatz und dem Rahmenflansch erreicht, die die auf den Fortsatz im Gebrauch wirkenden mechanischen Belastungen sicher aufnimmt.

Bei einer bevorzugten Ausführungsform des erfindungsgemäßen Scharnierbolzens weist der Fortsatz, insbesondere der Sockel, ein Vierkantprofil auf. Damit wird eine einfache und wirkungsvolle Verdrehsicherung bereitgestellt, so dass der Scharnierbolzen sicher und fest mit einem Außenrahmen verbindbar ist.

Bei einer weiteren bevorzugten Ausführungsform weist der Fortsatz eine rückseitige Fläche auf, die der Innenfläche des Rahmenflanschs gegenüber und bezüglich dieser zumindest abschnittsweise schräg angeordnet ist. Dadurch wird die Montage des Scharnierbolzens vereinfacht.

Vorzugsweise weist die rückseitige Fläche wenigstens zwei, insbesondere drei Gleitabschnitte mit unterschiedlicher Orientierung auf. Die unterschiedliche Orientierung der

Gleitabschnitte bewirkt eine Erleichterung bei der Montage des Scharnierbolzens, da die Gleitabschnitte die verschiedenen Bewegungsabläufe bzw. Stellungen des Scharnierbolzens beim Einsetzen gezielt unterstützen bzw. führen, wenn der Außenrahmen bzw. die Kante der Öffnung im Außenrahmen auf den Gleitabschnitten gleitet. Dabei muss die Kante bei der Montage nicht zwangsläufig mit allen Abschnitten in Berührung kommen. Durch die Gleitabschnitte wird eine geführte Bewegung des Scharnierbolzens ermöglicht, die die Vorrausetzung einer einfachen Montage schafft.

Der zweite Gleitabschnitt kann bezüglich der Innenfläche des Rahmenflanschs stärker geneigt sein als der erste Gleitabschnitt, so dass beim Zusammenwirken des Gleitabschnitts mit dem Außenrahmen bzw. einer Kante der Öffnung im Außenrahmen eine geführte Bewegung mit vorgegebenem Kippwinkel des Scharnierbolzens erreicht wird. Im Wesentlichen bewirkt das Gleiten der Kante entlang des zweiten Gleitabschnitts bei der Montage des Scharnierbolzens eine Kippbewegung des Bolzenteils vom Außenrahmen weg, so dass der zwischen dem Außenrahmen und der Innenfläche des Rahmenflansch gebildete Winkel reduziert wird. Bedingt durch den Neigungswinkel des zweiten Gleitabschnitts kann der Scharnierbolzen zusätzlich zur Kippbewegung eine lineare Bewegungskomponente in Längsrichtung des Außenrahmens erfahren.

Ferner kann der dritte Gleitabschnitt im Wesentlichen parallel zur Innenfläche des Rahmenflansches angeordnet sein. Das Gleiten des Außenrahmens bzw. einer Kante der Öffnung des Außenrahmens auf dem dritten Gleitabschnitt führt zu einer linearen Bewegung des Scharnierbolzens. Die lineare Bewegung wird solange fortgesetzt, bis der Fortsatz in die Öffnung im Außenrahmen vollständig eingreift und der Scharnierbolzen parallel zum Außenrahmen ausgerichtet ist. In diesem Einbauzustand des Scharnierbolzens ist ein minimales Spiel zwischen dem Fortsatz und der Öffnung des Außenrahmens gewährleistet.

Bei einer weiteren, bevorzugten Ausführungsform des erfindungsgemäßen Scharnierbolzens ist die dem Fortsatz zugeordnete Öffnung des Rahmenflanschs an einer vom Bolzenteil entfernten Seite des Fortsatzes angeordnet. Eine derartige Anordnung ermöglicht eine freie Zugänglichkeit der Öffnung, so dass die Montage des Scharnierbolzens, insbesondere die Verbindung des Rahmenflanschs mit dem Außenrahmen durch ein Verbindungselement, vereinfacht wird.

Der Erfindung liegt ferner der Gedanke zugrunde, ein Scharnier, insbesondere teilbares Scharnier, für einen Nutzfahrzeugaufbau mit einem Scharnierbolzen gemäß Anspruch 1 und einem Aufnahmeteil anzugeben, das eine Durchführung aufweist, deren Querschnitt dem Querschnitt der Spitze des Bolzenteils entspricht. Das erfindungsgemäße Scharnier ermöglicht eine axiale Sicherung einer Bordwand für einen Nutzfahrzeugaufbau, wobei das Aufnahmeteil bzw. Scharniergegenstück mit dem Scharnierbolzen nur dann verbunden bzw. davon getrennt werden kann, wenn die Bordwand in einem vorher festgelegten Winkel abgeklappt ist, so dass die Durchführung des Aufnahmeteils mit der Spitze des Bolzenteils gleich ausgerichtet ist.

Ferner liegt der Erfindung der Gedanke zugrunde, ein Nutzfahrzeug mit einem Außenrahmen und wenigstens einem Scharnierbolzen gemäß Anspruch 1 anzugeben, wobei der Außenrahmen wenigstens eine Öffnung aufweist, die dem Profil des Fortsatzes angepasst ist und in die die zwischen dem freien Ende und der Innenfläche gebildete Ausnehmung im montierten Zustand eingreift. Damit wird ein Nutzfahrzeug bereitgestellt, dessen Außenrahmen einerseits nach seiner vollständigen Fertigstellung, insbesondere nach dem Lackieren, mit einem derartigen Scharnierbolzen ausgestattet werden kann. Andererseits ist der Außenrahmen mit einem derartigen Scharnierbolzen nachrüstbar bzw. kann nach Bedarf mit einem derartigen Scharnierbolzen ausgerüstet werden.

Die Erfindung wird im Folgenden anhand von Ausführungsbeispielen unter Bezug auf die beigefügten schematischen Zeichnungen näher erläutert. Darin zeigen:
- Fig. 1: eine Draufsicht auf einen erfindungsgemäßen Scharnierbolzen nach ei- nem bevorzugten Ausführungsbeispiel;
- Fig. 2: eine Draufsicht auf den Fortsatz des Scharnierbolzens gemäß Fig. 1;
- Fig. 3: eine perspektivische Ansicht des Scharnierbolzens gemäß Fig. 1.
- Fig. 4: eine seitliche Teilansicht eines Nutzfahrzeugaufbaus mit Scharnieren nach einem bevorzugten Ausführungsbeispiel; und
- Fig. 5: einen Längsschnitt durch einen Scharnierbolzen gemäß Fig. 1 im einge- bauten Zustand.

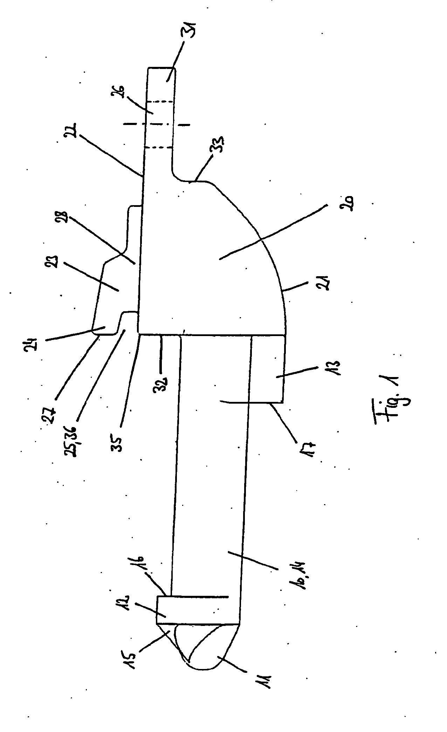

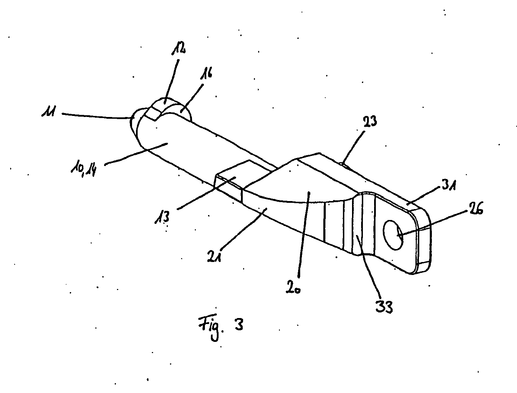

Die Figuren 1, 3 und 5 zeigen jeweils einen Scharnierbolzen 1 nach einem erfindungsgemäßen Ausführungsbeispiel mit einem Bolzenteil 10 und einem Rahmenflansch 20. Das Bolzenteil 10 umfasst eine Spitze 11, die einen radialen Ansatz 12 aufweist. Der radiale Ansatz 12 weist im Wesentlichen einen ovalen Querschnitt auf, wobei zwischen zwei kreisförmigen Querschnitten mit gleichem Radius ein rechteckiger Querschnitt angeordnet ist, dessen kürzere Kanten sich tangential zu den beiden kreisförmigen Querschnitten erstrecken. Der radiale Ansatz 12 umfasst auf einer dem Rahmenflansch 20 zugewandten Seite eine vordere Anschlagfläche 16, die sich senkrecht zu einem Schaft 14 des Bolzenteils 10 erstreckt. Auf der der Spitze 11 zugewandten Seite des radialen Ansatzes 12 weist der radiale Ansatz 12 einen Auslauf 15 auf, der einen kontinuierlichen Übergang zwischen der Spitze 11 und dem radialen Ansatz 12 bildet.

Das Bolzenteil 10 bzw. der Schaft 14 des Bolzenteils 10 ist im Wesentlichen zentral am Rahmenflansch 20 angeordnet. Im Bereich der Verbindungsstelle zwischen Bolzenteil 10 und Rahmenflansch 20 ist ein Anschlag 13 vorgesehen, der an einer vorderen Fläche 32 des Rahmenflanschs 20 und am Umfang des Schafts 14 angeordnet ist. Die vordere Fläche 32 erstreckt sich senkrecht zum Schaft 14 des Bolzenteils 10 und begrenzt den Rahmenflansch 20 in axialer Richtung bzw. in Längsrichtung auf einer dem Bolzenteil 10 zugewandten Seite. Dabei ist der Schaft 14 des Bolzenteils 10 an der vorderen Fläche 32 des Rahmenflanschs 20 angeordnet. Der Anschlag 13 geht im Wesentlichen tangential aus dem Schaft 14 hervor und schließt bündig mit einer Außenfläche 21 des Rahmenflanschs 20 ab. Auf der der Spitze 11 zugewandten Seite des Anschlags 13 ist eine hintere Anschlagsfläche 17 ausgebildet, die sich senkrecht zum Schaft 14 des Bolzenteils 10 erstreckt.

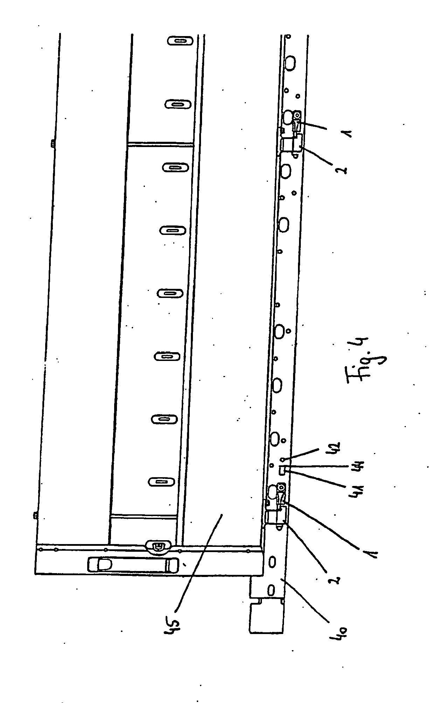

Das Bolzenteil 10 dient zur Aufnahme eines Scharniergegenstücks 2 das eine Längserstreckung aufweist, die dem Abstand zwischen der vorderen und der hinteren Anschlagsfläche 16, 17 entspricht (Fig. 4). Ferner ist in derartigen Scharniergegenstücken eine Durchführung, insbesondere eine Langlochbohrung, vorgesehen, die dem Querschnitt des radialen Ansatzes 12 angepasst ist. Die Langlochbohrung ist vorzugsweise derart angeordnet, dass das Scharniergegenstück 2, das an einer Bordwand 45 eines Nutzfahrzeugaufbaus befestigt ist, nur dann über dem radialen Ansatz 12 geschoben werden kann, wenn die Bordwand 45 in einem bestimmten Winkel, beispielsweise 45°, abgeklappt ist. Sobald das Scharniergegenstück 2 auf dem Bolzenteil 10 angeordnet ist, ist die Bordwand 45 in anderen Winkelstellungen axial gesichert.

Der Rahmenflansch 20 des Scharnierbolzens 1 weist eine Außenfläche 21 und eine Innenfläche 22 auf, wobei die Innenfläche 22 der Außenfläche 21 gegenüber angeordnet ist. Bei der Ausführungsform gemäß den Figuren 1,3 und 5 bildet die Außenfläche 21 mit der vorderen Fläche 32 einen rechten Winkel, wobei die Außenfläche 21 eine Krümmung aufweist, so dass der Querschnittsdurchmesser des Rahmenflanschs 20 mit zunehmendem Abstand von der vorderen Fläche 32 kleiner wird. Der minimale Querschnittsdurchmesser des Rahmenflanschs 20 ist im Bereich der hinteren Fläche 33 erreicht, die im Wesentlichen parallel zur vorderen Fläche 32 ausgerichtet ist. Die Innenfläche 22 ist plan bzw. flächig ausgebildet und erstreckt sich im Wesentlichen senkrecht von der vorderen Fläche 32 bis über die hintere Fläche 33 hinaus in eine Verbindungsplatte 31. Die Verbindungsplatte 31 ist an einer vom Bolzenteil 10 entfernten Seite des Rahmenflanschs 20 angeordnet und umfasst eine Bohrung bzw. Öffnung 26, wobei die Bohrungsachse der Öffnung 26 senkrecht zur Längsachse des Bolzenteils 10 ausgerichtet ist. Ferner umfasst der Rahmenflansch 20 einen Fortsatz 23, der an der Innenfläche 22 im Bereich zwischen der vorderen Fläche 32 und der Öffnung 26 angeordnet ist.

Die Öffnung 26 zur Verbindung des Rahmenflanschs 20 mit dem Außenrahmen 40 kann auch eine andere Form als die dargestellte Bohrung aufweisen. Beispielsweise kann eine U-förmige Aussparung in der Verbindungsplatte 31 vorgesehen sein, die sich in Längs- oder Querrichtung in Bezug auf den Scharnierbolzen 1 erstreckt.

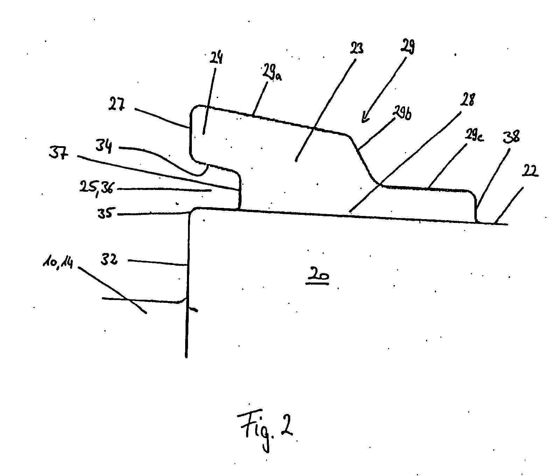

Eine vergrößerte Darstellung des Fortsatzes 23 zeigt Fig. 2. Der Fortsatz 23 umfasst einen Sockel 28, der an der Innenfläche 22 des Rahmenflanschs 20 angeordnet ist. Der Sockel 28 umfasst im Wesentlichen ein Vierkantprofil bzw. weist in einer zur Innenfläche 22 parallelen Ebene einen rechteckigen Querschnitt auf. Ferner weist der Fortsatz 23 ein freies Ende 24 auf, das sich in Richtung der Spitze 11 des Bolzenteils 10. Zwischen dem freien Ende 24 des Fortsatzes 23 und der Innenfläche 22 des Rahmenflanschs 20 ist eine Ausnehmung 25 vorgesehen. Die Ausnehmung 25 umfasst eine Eingriffsfläche 34, die schräg bzw. winkelig zur Innenfläche 22 des Rahmenflanschs 20, insbesondere nach Innen zulaufend, angeordnet ist. Insbesondere verjüngt sich die Ausnehmung 25 in Richtung der Verbindungsplatte 31. Die Ausnehmung 25 ist in Längsrichtung durch eine vordere Sockelfläche 37 begrenzt, die die Eingriffsfläche 34 mit der Innenfläche 22 verbindet und den Boden bzw. Grund der Ausnehmung 25 bildet. Die vordere Sockelfläche 37 ist dabei im Wesentlichen senkrecht zur Innenfläche 22 des Rahmenflanschs 20 angeordnet und bildet mit der Eingriffsfläche 34 einen stumpfen Winkel. Fertigungsbedingt weisen die Kanten zwischen der vorderen Sockelfläche 37 und der Innenfläche 22 bzw. der Eingriffsfläche 34 eine Krümmung mit kleinem Krümmungsradius auf. Im Wesentlichen entspricht die Tiefe der Ausnehmung 25 der Differenz zwischen der Gesamtlänge des Fortsatzes 23 und der Länge der entsprechenden Öffnung 41 eines Nutzfahrzeugaußenrahmens 40. Dabei ist die Tiefe der Ausnehmung 25 derart ausgebildet, dass der Außenrahmen 40, insbesondere eine senkrechte Wandung 43 eines Außenrahmens 40, in die Ausnehmung 25 eingreifen kann und darin sicher fixiert ist. Insbesondere ist die Tiefe der Ausnehmung 25 größer als das Spiel zwischen dem Fortsatz 23 und der Öffnung 41 im Außenrahmen 40, so dass ein Entfernen des Scharnierbolzens 1 durch eine Längsverschiebung desselben verhindert ist. Hinzu kommt, dass die Länge der vorderen Sockelfläche 37, d.h. der Abstand zwischen der Eingriffsfläche 34 und der Innenfläche 22 im Bereich der Sockelfläche 37, bzw. die Höhe der Ausnehmung 25 im Wesentlichen der Wandstärke des Außenrahmens 40 entspricht.

Das freie Ende 24 ist in Längsrichtung durch eine Stirnfläche 27 begrenzt, die plan ausgeführt ist und das freie Ende 24 in derselben Ebene abschließt, die die vordere Fläche 32 des Rahmenflanschs 20 umfasst. Die Stirnfläche 27 ist senkrecht zur Innenfläche 22 ausgerichtet und bildet mit der Innenfläche 22 eine Eintrittsöffnung 36 der Ausnehmung 25.

In einem spitzen Winkel ist zur Stirnfläche 27 eine rückseitige Fläche 29 des Fortsatzes 23 angeordnet, die sich im Wesentlichen in Längsrichtung des Scharnierbolzens erstreckt und der Innenfläche 22 gegenüber angeordnet ist. Die rückseitige Fläche 29 umfasst einen ersten Gleitabschnitt 29a, der zur Stirnfläche 27 schräg und im Wesentlichen parallel zur Eingriffsfläche 34 der Ausnehmung 25 angeordnet ist. An den ersten Gleitabschnitt 29a schließt ein zweiter Gleitabschnitt 29b an, der die rückseitige Fläche 29 in einem Winkel bezüglich des ersten Gleitabschnitts 29a fortsetzt. Ein dritter Gleitabschnitt 29c der rückseitigen Fläche 29 ist im Wesentlichen parallel zur Innenfläche 22 des Rahmenflanschs 20 ausgerichtet und verbindet die hintere Sockelfläche 38 mit dem zweiten Gleitabschnitt 29b. Insofern begrenzt der dritte Gleitabschnitt 29c die Höhe des Sockels 28, wobei die Sockelhöhe im Wesentlichen der Höhe der Ausnehmung 25 bzw. der Wandstärke des Außenrahmens 40 entspricht. Im Allgemeinen weisen die Gleitabschnitte 29a, 29b, 29c unterschiedliche Orientierungen auf. Der zweite Gleitabschnitt 29b ist dabei stärker geneigt als der erste Gleitabschnitt 29a, der bezüglich der Innenfläche 22 des Rahmenflanschs 20 schräg bzw. winklig angeordnet ist. Die Bezeichnung erster, zweiter und dritter Gleitabschnitt 29a, 29b, 29c bezieht sich auf die Anordnung der Gleitabschnitte 29a, 29b, 29c bezüglich des Bolzenteils 10. Der erste Gleitabschnitt 29a ist näher am Bolzenteil 10 angeordnet als der zweite Gleitabschnitt 29b, der wiederum näher am Bolzenteil 10 angeordnet ist als der dritte Gleitabschnitt 29a. Ferner beschreibt die Nummerierung der Gleitabschnitte 29a, 29b, 29c die funktionale Reihenfolge der Gleitbewegungen bei der Montage des Scharnierbolzens 1, wenn die Gleitabschnitte 29a, 29b, 29c mit einer Öffnung des Außenrahmens 40 zusammenwirken.

Generell bildet der Fortsatz 23 eine Nase bzw. einen Haken zum Eingriff in den Außenrahmen eines Nutzfahrzeugs, wobei der Haken im Wesentlichen einen Flansch in Form des Sockels 28 aufweist, der mit dem Rahmenflansch 22 verbunden bzw. mit dem Rahmenflansch 22 einteilig ausgebildet ist.

Der Scharnierbolzen 1 wirkt bevorzugt mit einem Außenrahmen 40 eines Nutzfahrzeugs zusammen, der in einer senkrechten Außenwandung 43 eine Öffnung bzw. ein Fenster 41 umfasst, das im Wesentlichen einen rechteckigen Querschnitt aufweist und dem Sockel 28 des Fortsatzes 23 angepasst ist (Fig. 4). In Längsrichtung des Außenrahmens 40 ist eine dem Fenster 41 zugeordnete Rahmenbohrung 42 angeordnet, wobei der Abstand zwischen dem Fenster 41 und der Rahmenbohrung 42 dem Abstand zwischen dem Sockel 28 des Fortsatzes 23 und der Öffnung 26 der Verbindungsplatte 31 entspricht. Zur Montage des Scharnierbolzens 1 wird die Spitze 11 des Bolzenteils 10 in Richtung der senkrechten Wandung 43 des Außenrahmens 40 gekippt, so dass die Innenfläche 22 mit der Wandung 43 des Außenrahmens 40 einen Winkel bildet, wobei die vordere Fläche 32 näher am Außenrahmen 40 angeordnet ist als die Verbindungsplatte 31. Im Wesentlichen erfolgt die Montage also durch eine Hebelbewegung des Scharnierbolzens 1, wobei die Drehachse für die Kipp- bzw. Hebelbewegung im Bereich der zwischen der vorderen Fläche 32 und der Innenfläche 22 eingeschlossenen Drehkante 35 gebildet ist.

Zusätzlich bewirken die Gleitabschnitte 29a, 29b, 29c der rückseitigen Fläche 29 eine lineare Bewegungskomponente. Dadurch, dass der zweite Gleitabschnitt 29b der rückseitigen Fläche 29 über eine Gleitkante 44 des Fensters 41 gleitet, wird der Scharnierbolzen 1 in Längsrichtung des Außenrahmens 40 verschoben, so dass der Außenrahmen 40 in die Ausnehmung 25 eingreift bzw. in die Ausnehmung 25 geschoben wird. In der Praxis wird der Scharnierbolzen 1 mit dem Außenrahmen 40 verbunden, indem der erste Gleitabschnitt 29a der rückseitigen Fläche 29 bündig an einer Außenwandung 43 des Außenrahmens 40 im Bereich eines Fensters 41 angesetzt wird und daraufhin auf dem Außenrahmen 40 verschoben wird, so dass der erste Gleitabschnitt 29a auf dem Außenrahmen 40 bzw. einer Gleitkante 44 des Fensters 41 gleitet, bis das freie Ende 24 des Fortsatzes 23 in das Fenster 41 eingreift.

Eine zusätzliche Kippbewegung der Spitze 11 des Bolzenteils 10 in Richtung des Außenrahmens 40 bewirkt, dass die Ausnehmung 25 fluchtend mit der Außenwandung 43 des Außenrahmens 40 ausgerichtet wird. Durch weiteres Verschieben des Scharnierbolzens 1 in Längsrichtung des Außenrahmens 40 wird erreicht, dass die Gleitkante 44 des Fensters 41, die auf der rückseitigen Fläche 29 des Fortsatzes 23 gleitet, in Anlage mit dem zweiten Gleitabschnitt 29b kommt und entlang dieses Gleitabschnitts 29b gleitet, so dass eine entgegengesetzte Kippbewegung bewirkt wird, d.h. dass die Spitze 11 des Bolzenteils 10 sich vom Außenrahmen 40 entfernt. Sobald die Kante des Fensters 41 den dritten Gleitabschnitt 29c der rückseitigen Fläche 29 erreicht, wird die Kippbewegung aufgrund der parallelen Anordnung des dritten Gleitabschnitts 29c zum Bolzenteil 10 unterbrochen, so dass im weiteren Verlauf im Wesentlichen eine lineare Verschiebung des Scharnierbolzens 1 in Längsrichtung des Außenrahmens 40 erfolgt. Dabei greift der Außenrahmen 40 bzw. die Außenwandung 43 des Außenrahmens 40 in die Ausnehmung 25 ein und wird im Wesentlichen vollständig in die Ausnehmung 25 hineingeschoben. Sobald der Außenrahmen 40 die vordere Sockelfläche 37 erreicht bzw. mit dieser in Anlage kommt, erreicht auch die Gleitkante 44 des Fensters 41 den Übergang zwischen dem dritten Gleitabschnitt 29c der rückseitigen Fläche 29 und der hinteren Sockelfläche 38. Der Scharnierbolzen 1 kann nun eine weitere Kippbewegung ausführen, wobei die Gleitkante 44 im Wesentlichen entlang der hinteren Sockelfläche 38 gleitet, bis die Innenfläche 22 bündig mit dem Außenrahmen 40 in Anlage kommt.

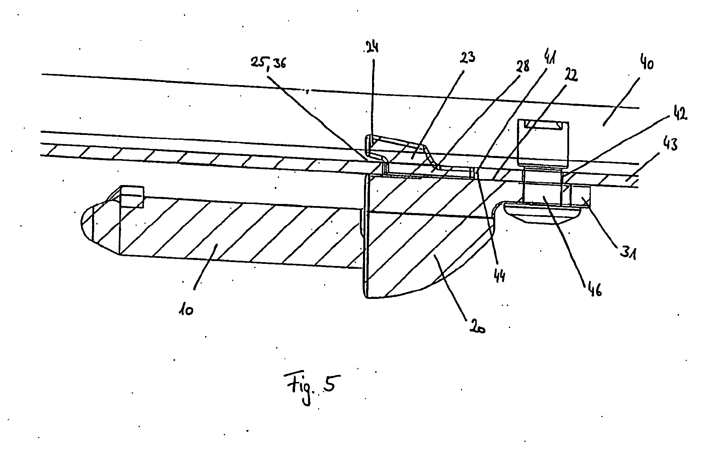

Im montierten Zustand umgreift das freie Ende 24 des Fortsatzes 23 mit dem Sockel 28 und der Innenfläche 22 des Rahmenflanschs 20 die senkrechte Außenwandung 43 des Außenrahmens 40 (Fig. 4). Dementsprechend entspricht die Höhe der Ausnehmung 25, d.h. der Abstand zwischen Eingriffsfläche 34 und Innenfläche 22 im Bereich der vorderen Sockelfläche 37, im Wesentlichen der Wandstärke der Wandung 43 des Außenrahmens 40. Wie in Fig. 5 gut zu erkennen, entspricht die Länge des Sockels 28 im Wesentlichen der Länge der Öffnung bzw. des Fensters 41 im Außenrahmen 40. Die Sockelhöhe ist dabei an die Höhe der Ausnehmung 25 und somit an die Wandstärke der Wandung 43 des Außenrahmens 40 angepasst. Gemäß des hier dargestellten Ausführungsbeispiels ist der Scharnierbolzen 1 mit dem Außenrahmen 40 vernietet. Andere Verbindungsarten bzw. Mittel zur Verbindung des Rahmenflanschs 20 mit dem Außenrahmen 40 sind möglich. Der Schaft 14 des Bolzenteils 10 ist im hier dargestellten, montierten Zustand des Scharnierbolzens 1 parallel zur Wandung 43 des Außenrahmens 40 ausgerichtet. Im montierten Zustand liegt die Innenfläche 22 des Rahmenflanschs 20 bündig an der Wandung 43 des Außenrahmens 40 an, so dass der Scharnierbolzen 1 durch ein Verbindungselement 46, vorzugsweise eine Schraube oder einen Niet, am Außenrahmen 40 fixiert werden kann. Dazu wirkt das Verbindungselement 46 mit der Öffnung 26 in der Verbindungsplatte 31 sowie der Rahmenbohrung 42 in der Wandung 43 des Außenrahmens 40 zusammen, wobei im montierten Zustand die beiden Bohrungen 26, 42 zueinander koaxial ausgerichtet sind.

Der Scharnierbolzen 1 ist als Zollsicherungsbolzen geeignet. Sobald das Bolzenteil 10 mit einem Scharniergegenstück 2 versehen ist, wird durch den vergrößerten Gesamtquerschnitt im Bereich des Bolzenteils 10 verhindert, dass die Spitze 11 des Bolzenteils 10 in Richtung der Wandung 43 des Außenrahmens 40 gekippt werden kann. Dazu weist das Scharniergegenstück 2 vorzugsweise einen Querschnittsdurchmesser auf, der im Wesentlichen dem Abstand zwischen der Außenfläche 21 und der Innenfläche 22 des Rahmenflanschs 20 entspricht. Auf diese Weise kann der Scharnierbolzen 1 auch dann nicht vom Außenrahmen 40 entfernt werden, wenn das Verbindungselement 46 aus der Verbindungsplatte 31 entfernt ist, da zur Demontage des Scharnierbolzens 1 zumindest teilweise eine Kippbewegung um die Drehkante 35 erforderlich ist. Generell ist also eine Demontage des Scharnierbolzens 1 nur möglich, wenn die Bordwand 45 bzw. das Scharniergegenstück 2 vom Bolzenteil 10 entfernt ist. Dazu ist ein Abklappen der Bordwand 45 in eine bestimmte Winkelstellung notwendig. Die hochgeklappte Bordwand 45 ist zollsicher verplombt, so dass mit dem Scharnierbolzen 1 verhindert wird, dass ohne Beschädigung der Zollsicherung ein Zugriff auf das Transportgut erfolgt.

Der Scharnierbolzen ist vorzugsweise 1 einstückig, insbesondere als einstückiges Gussteil, hergestellt. Im Unterschied zu bekannten, zollsicheren Scharnierbolzen wird der hier beschriebene Scharnierbolzen 1 nicht mit dem Außenrahmen 40 eines Nutzfahrzeugaufbaus verschweißt, so dass die Montage des Scharnierbolzens 1 in einem späteren Produktionsschritt des Nutzfahrzeugaufbaus erfolgen kann. Insbesondere ermöglicht der Scharnierbolzen 1 eine Montage nach vollständiger Lackierung des Außenrahmens 40. Es ist auch möglich, dass der Scharnierbolzen 1 im Rahmen einer Nachrüstung am Nutzfahrzeugrahmen 40 montiert wird. Auf diese Weise wird ein flexibel einsetzbarer Nutzfahrzeugaufbau bzw. -außenrahmen bereitgestellt, der kurzfristig und nach Bedarf mit oder ohne Bordwand 45 eingesetzt werden kann.

### Bezugszeichenliste

- 1: Scharnierbolzen
- 2: Scharniergegenstück
- 10: Bolzenteil
- 11: Spitze
- 12: radialer Ansatz
- 13: Anschlag
- 14: Schaft
- 15: Auslauf
- 16: vordere Anschlagfläche
- 17: hintere Anschlagfläche
- 20: Rahmenflansch
- 21: Außenfläche
- 22: Innenfläche
- 23: Fortsatz
- 24: freies Ende
- 25: Ausnehmung
- 26: Öffnung für ein Verbindungselement
- 27: Stirnfläche
- 28: Sockel
- 29: rückseitige Fläche
- 29a: erster Gleitabschnitt
- 29b: zweiter Gleitabschnitt
- 29c: dritter Gleitabschnitt
- 30: abgerundete Kante
- 31: Verbindungsplatte
- 32: vordere Fläche
- 33: hintere Fläche
- 34: Eingriffsfläche
- 35: Drehkante
- 36: Eintrittsöffnung der Ausnehmung
- 37: vordere Sockelfläche
- 38: hintere Sockelfläche
- 40: Außenrahmen
- 41: Fenster
- 42: Rahmenbohrung
- 43: Wandung
- 44: Gleitkante
- 45: Bordwand
- 46: Verbindungselement

## Patentansprüche

1. Scharnierbolzen (1) für einen Nutzfahrzeugaufbau mit einem Bolzenteil (10), das mit einem Rahmenflansch (20) verbunden ist, wobei der Rahmenflansch (20) eine Außenfläche (21) und eine der Außenfläche (21) gegenüber angeordnete Innenfläche (22) aufweist, die im eingebauten Zustand des Scharnierbolzens (1) zur Anlage an einen Außenrahmen (40) vorgesehen ist,
**gekennzeichnet durch**
wenigstens einen an der Innenfläche (22) des Rahmenflanschs (20) angeordneten Fortsatz (23), der ein freies Ende (24) umfasst, wobei zwischen dem freien Ende (24) und der Innenfläche (22) eine Ausnehmung (25) gebildet ist, die angepasst ist derart, dass der Außenrahmen (40) im eingebauten Zustand in die Ausnehmung (25) eingreifen kann, sowie wenigstens ein dem Fortsatz (23) zugeordnetes Mittel, insbesondere wenigstens eine Öffnung (26) für ein Verbindungselement zur Verbindung des Rahmenflanschs (20) mit dem Außenrahmen (40).

2. Scharnierbolzen (1) nach Anspruch 1,
**dadurch gekennzeichnet, dass**
sich die Ausnehmung (25) und/oder das freie Ende (24) des Fortsatzes (23) im Wesentlichen in Richtung des Bolzenteils (10) erstreckt.

3. Scharnierbolzen (1) nach Anspruch 1 oder 2,
**dadurch gekennzeichnet, dass**
das freie Ende (24) des Fortsatzes (23) eine Stirnfläche (27) aufweist, die im Wesentlichen senkrecht zur Innenfläche (22) des Rahmenflanschs (20) angeordnet ist und zusammen mit der Innenfläche (22) eine Eintrittsöffnung (36) der Ausnehmung (25) bildet.

4. Scharnierbolzen (1) nach Anspruch 3,
**dadurch gekennzeichnet, dass**
die Stirnfläche (27) mit einer vorderen Fläche (32) des Rahmenflanschs (20) fluchtet, wobei die vordere Fläche (32) den Rahmenflansch (20) auf einer dem Bolzenteil (10) zugewandten Seite begrenzt und die Innenfläche (22) mit der Außenfläche (21) verbindet.

5. Scharnierbolzen (1) nach wenigstens einem der Ansprüche 1 bis 4,
**dadurch gekennzeichnet, dass**
der Fortsatz (23) einen Sockel (28) aufweist, der mit dem Rahmenflansch (20) verbunden und breiter als das freie Ende (24) ist.

6. Scharnierbolzen (1) nach wenigstens einem der Ansprüche 1 bis 5,
**dadurch gekennzeichnet, dass**
der Fortsatz (23), insbesondere der Sockel (28), zumindest abschnittsweise ein Vierkantprofil aufweist.

7. Scharnierbolzen (1) nach wenigstens einem der Ansprüche 1 bis 6,
**dadurch gekennzeichnet, dass**
der Fortsatz (23) eine rückseitige Fläche (29) aufweist, die der Innenfläche (22) des Rahmenflanschs (20) gegenüber und bezüglich dieser zumindest abschnittsweise schräg angeordnet ist.

8. Scharnierbolzen (1) nach Anspruch 7,
**dadurch gekennzeichnet, dass**
die rückseitige Fläche (29) wenigstens zwei, insbesondere drei Gleitabschnitte (29a, 29b, 29c) mit unterschiedlicher Orientierung aufweist.

9. Scharnierbolzen (1) nach Anspruch 8,
**dadurch gekennzeichnet, dass**
der zweite Gleitabschnitt (29b) bezogen auf die Innenfläche (22) stärker geneigt ist als der erste Gleitabschnitt (29a).

10. Scharnierbolzen (1) nach Anspruch 8 oder 9,
**dadurch gekennzeichnet, dass**
der dritte Gleitabschnitt (29c) im Wesentlichen parallel zur Innenfläche (22) angeordnet ist.

11. Scharnierbolzen (1) nach wenigstens einem der Ansprüche 1 bis 10,
**dadurch gekennzeichnet, dass**
die dem Fortsatz (23) zugeordnete Öffnung (26) des Rahmenflanschs (20) an einer vom Bolzenteil (10) entfernten Seite des Fortsatzes (23) angeordnet ist.

12. Scharnier, insbesondere teilbares Scharnier, für einen Nutzfahrzeugaufbau mit einem Scharnierbolzen (1) gemäß Anspruch 1 und einem Aufnahmeteil (2), das eine Durchführung aufweist, deren Querschnitt dem Querschnitt der Spitze (11) des Bolzenteil (10) entspricht.

13. Nutzfahrzeug umfassend einen Außenrahmen (40) und wenigstens einen Scharnierbolzen (1) gemäß Anspruch 1, wobei der Außenrahmen (40) wenigstens eine Öffnung (41) aufweist, die dem Profil des Fortsatzes (23) angepasst ist und in die die zwischen dem freien Ende (24) und der Innenfläche (22) des Scharnierbolzens (1) gebildete Ausnehmung (25) im montierten Zustand eingreift.

## Claims

1. A hinge pin (1) for a commercial vehicle structure, having a pin part (10) connected to a frame flange (20), wherein the frame flange (20) comprises an outer surface (21) and an inner surface (22) arranged opposite the outer surface (21) which is provided to abut against an outer frame (40) when the hinge pin (1) is in the mounted state,
**characterized by**
at least one extension (23) arranged on the inner surface (22) of the frame flange (20) and comprising a free end (24), wherein a recess (25) is formed between the free end (24) and the inner surface (22) which is adapted in such a manner that the outer frame (40) can engage into the recess (25) when in the mounted state, as well as at least one means associated with the extension (23), in particular at least one opening (26) for a connecting element for connecting the frame flange (20) to the outer frame (40).

2. The hinge pin (1) according to claim 1,
**characterized in that**
the recess (25) and/or the free end (24) of the extension (23) essentially extend(s) in the direction of the pin part (10).

3. The hinge pin (1) according to claim 1 or 2,
**characterized in that**
the free end (24) of the extension (23) comprises a front face (27) arranged essentially perpendicular to the inner surface (22) of the frame flange (20) and, together with the inner surface (22), forms an entry opening (36) of the recess (25).

4. The hinge pin (1) according to claim 3,
**characterized in that**
the front face (27) is aligned with a front surface (32) of the frame flange (20), wherein the front surface (32) delimits the frame flange (20) on a side facing the pin part (10) and connects the inner surface (22) to the outer surface (21).

5. The hinge pin (1) according to at least one of claims 1 to 4,
**characterized in that**
the extension (23) has a base (28) which is connected to the frame flange (20) and wider than the free end (24).

6. The hinge pin (1) according to at least one of claims 1 to 5,
**characterized in that**
the extension (23), in particular the base (28), has a square profile at least in sections.

7. The hinge pin (1) according to at least one of claims 1 to 6,
**characterized in that**
the extension (23) has a rear surface (29) arranged opposite the inner surface (22) of the frame flange (20) and obliquely with respect to same at least in sections.

8. The hinge pin (1) according to claim 7,
**characterized in that**
the rear surface (29) comprises two, in particular three sliding sections (29a, 29b, 29c) of different orientation.

9. The hinge pin (1) according to claim 8,
**characterized in that**
the second sliding section (29a) is more inclined with respect to the inner surface (22) than the first sliding section (29a).

10. The hinge pin (1) according to claim 8 or 9,
**characterized in that**
the third sliding section (29c) is arranged essentially parallel to the inner surface (22).

11. The hinge pin (1) according to at least one of claims 1 to 10,
**characterized in that**
the opening (26) of the frame flange (20) associated with the extension (23) is arranged on a side of the extension (23) remote from the pin part (10).

12. A hinge, in particular a separable hinge, for a commercial vehicle structure, having a hinge pin (1) according to claim 1, and a receiving part (2) comprising a passage, the cross-section of which corresponds to the cross-section of the tip (11) of the pin part (10).

13. A commercial vehicle comprising an outer frame (40) and at least one hinge pin (1) according to claim 1, wherein the outer frame (40) comprises at least one opening (41) adapted to the profile of the extension (23) and which engages into the recess (25) formed between the free end (24) and the inner surface (22) of the hinge pin (25) in the mounted state.

## Revendications

1. Boulon de charnière (1) pour une carrosserie de véhicule utilitaire comprenant une partie boulon (10), qui est reliée à une bride de cadre (20), laquelle bride (20) présente une surface extérieure (21) et une surface intérieure (22) disposée en face de la surface extérieure (21), qui est prévue, lorsque le boulon de charnière (1) est monté, pour venir en appui sur un cadre extérieur (40),
**caractérisé par**
au moins un appendice (23) qui est disposé sur la surface intérieure (22) de la bride de cadre (20) et comprend une extrémité (24) libre, une cavité (25) étant formée entre l'extrémité (24) libre et la surface intérieure (22), laquelle cavité est adaptée de telle sorte que le cadre extérieur (40) puisse s'engager dans l'état monté dans la cavité (25), et au moins un moyen associé à l'appendice (23), en particulier au moins une ouverture (26) pour un élément de liaison pour la liaison de la bride de cadre (20) avec le cadre extérieur (40).

2. Boulon de charnière (1) selon la revendication 1,
**caractérisé en ce que**
la cavité (25) et/ou l'extrémité (24) libre de l'appendice (23) s'étend(ent) essentiellement en direction de la partie boulon (10).

3. Boulon de charnière (1) selon la revendication 1 ou 2,
**caractérisé en ce que**
l'extrémité (24) libre de l'appendice (23) présente une surface frontale (27) qui est disposée essentiellement perpendiculairement à la surface intérieure (22) de la bride de cadre (20) et forme conjointement avec la surface intérieure (22) une ouverture d'entrée (36) de la cavité (25).

4. Boulon de charnière (1) selon la revendication 3,
**caractérisé en ce que**
la surface frontale (27) est alignée avec une surface (32) avant de la bride de cadre (20), la surface (32) avant délimitant la bride de cadre (20) sur un côté tourné vers la partie boulon (10) et reliant la surface intérieure (22) à la surface extérieure (21).

5. Boulon de charnière (1) selon au moins l'une quelconque des revendications 1 à 4,
**caractérisé en ce que**
l'appendice (23) présente un socle (28) qui est relié à la bride de cadre (20) et est plus large que l'extrémité (24) libre.

6. Boulon de charnière (1) selon au moins l'une quelconque des revendications 1 à 5,
**caractérisé en ce que**
l'appendice (23), en particulier le socle (28), présente au moins par endroits un profil quatre pans.

7. Boulon de charnière (1) selon au moins l'une quelconque des revendications 1 à 6,
**caractérisé en ce que**
l'appendice (23) présente une surface (29) côté arrière qui est disposée en face de la surface intérieure (22) de la bride de cadre (20) et en biais au moins par endroits par rapport à cette surface.

8. Boulon de charnière (1) selon la revendication 7,
**caractérisé en ce que**
la surface (29) côté arrière présente au moins deux, en particulier trois parties coulissantes (29a, 29b, 29c) avec une orientation différente.

9. Boulon de charnière (1) selon la revendication 8,
**caractérisé en ce que**
la seconde partie coulissante (29b) est plus fortement inclinée que la première partie coulissante (29a) par rapport à la surface intérieure (22).

10. Boulon de charnière (1) selon la revendication 8 ou 9,
**caractérisé en ce que**
la troisième partie coulissante (29c) est disposée essentiellement parallèlement à la surface intérieure (22).

11. Boulon de charnière (1) selon au moins l'une quelconque des revendications 1 à 10,
**caractérisé en ce que**
l'ouverture (26), associée à l'appendice (23), de la bride de cadre (20) est disposée sur un côté, éloigné de la partie boulon (10), de l'appendice (23).

12. Charnière, en particulier charnière divisible, pour une carrosserie de véhicule utilitaire comprenant un boulon de charnière (1) selon la revendication 1 et une partie de logement (2), qui présente un passage dont la section correspond à la section de la pointe (11) de la partie boulon (10).

13. Véhicule utilitaire comprenant un cadre extérieur (40) et au moins un boulon de charnière (1) selon la revendication 1, le cadre extérieur (40) présentant au moins une ouverture (41) qui est adaptée au profil de l'appendice (23) et dans laquelle la cavité (25) formée entre l'extrémité (24) libre et la surface intérieure (22) du boulon de charnière (1) s'engage dans l'état monté.
